Europäisches Patentamt

European Patent Office

Office européen des brevets

(11) Publication number: **0 199 991 B1**

# EUROPEAN PATENT SPECIFICATION

(45) Date of publication of patent specification: **30.12.92**    (51) Int. Cl.⁵: **C08L 27/18**, C08L 101/00,
//(C08L23/18,101:00)

(21) Application number: **86104129.1**

(22) Date of filing: **25.03.86**

(54) Fluoropolymer alloys, their preparation and application.

(30) Priority: **01.04.85 CN 85100490**
**01.04.85 CN 85100491**

(43) Date of publication of application:
**05.11.86 Bulletin 86/45**

(45) Publication of the grant of the patent:
**30.12.92 Bulletin 92/53**

(84) Designated Contracting States:
**CH DE FR GB LI**

(56) References cited:
**EP-A- 0 088 414**
**EP-A- 0 106 764**
**GB-A- 935 706**
**GB-A- 2 144 761**

(73) Proprietor: **SHANGHAI INSTITUTE OF ORGAN-
IC CHEMISTRY ACADEMIA SINICA
Lingling Road
Shanghai(CN)**

(72) Inventor: **Youlu, Duan
Lingland Road 345
Shanghai(CN)**
Inventor: **Shanrong, Ji
Lingling Road 345
Shanghai(CN)**
Inventor: **Tingchun, Huang
Lingling Road 345
Shanghai(CN)**
Inventor: **Xiongying, Yu
Lingling Road 345
Shanghai(CN)**
Inventor: **Jin, Sun
Lingling Road 345
Shanghai(CN)**

(74) Representative: **Schupfner, Gerhard D. et al
Müller, Schupfner & Gauger Karlstrasse 5
Postfach 14 27
W-2110 Buchholz/Nordheide(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

# EP 0 199 991 B1

## Description

This invention relates to fluoropolymer alloys made of melt fabricatable extra-high-molecular weight fluorinated ethylene-propylene copolymer ( EHMW-FEP ) and one or more other polymers, their preparation and application.

The fluoropolymer alloys are new materials having different properties from original polymers of which they are made. It has become an important way to prepare new materials with a great variety of properties, because of its advantages of using available polymers, simple process, and short research period. It has become of attracting interest recently, see Sato Kawa, plastics ( Japan ) 32, 69 (1981). The fluoropolymer alloys which have been reported are limited to blending alloys based on polyvinylidene fluoride, as well as on polytetrafluoroethylene ( PTFE ) dispersion and fluorinated ethylene-propylene copolymer (FEP) dispersion GB-A 935, 706, (1960); Japanese patent kokai 12521/62.

Polytetrafluoroethylene, commonly named " King of plastics ", has excellent comprehensive properties. It has excellent thermal and chemical stability, and outstanding electrical insulation and anti-stick properties. But it could not be fabricated by melt processing, it can only be fabricated by cold compaction and then sintering. Its creep-resistance is also low. Therefore, its applications have been limited.

Fluorinated ethylene-propylene copolymer having good creep-resistance is copolymer of tetrafluoroethylene and hexafluoro-propylene, it can be melt fabricated due to the presence of trifluoromethyl in the copolymer chain. The chemical inertness and outstanding electrical insulating properties of the copolymer are similar to polytetrafluoroethylene, but its thermal stability is not so excellent as PTFE, it can only withstand temperature up to 200°C, and its cost is higher than that of PTFE.

The purpose of present invention is to prepare a fluorine-containing material with more perfect properties through blending PTFE and FEP, and obtaining a polymer alloy with enhancing excellent properties and overcoming drawbacks of the two original polymers.

There are processes for preparing polymer alloy made of polytetrafluoroethylene and fluorinated ethylene-propylene copolymer in British patent 935, 706 (1960) and Japanese patent kokai 12521/62, by using co-precipitation of these two fluoropolymer dispersions. The process is complicated, and the cost increased. Mechanical properties of the fluoropolymer alloy are worse than that of PTFE and FEP; for example their tensile strength is much lower than that of the two original polymers and only 142-213 bar (142-213 Kg/cm$^2$) under room temperature.

An important problem is to match the polytetrafluoroethylene with fluorinated ethylene-propylene copolymer in order to get a good fluoropolymer alloy made of PTFE and FEP. These two raw fluoropolymers have different processing temperatures and different thermal stability. Temperature of melt compression molding of FEP is about 310° C, but sintering temperature after cold compaction of PTFE is about 380°C. The decomposition rate of FEP is much higher than that of PTFE at 380° C. Particularly, when FEP resin having carboxyl end group is prepared by copolymerization using persulfates as initiator, it must be roasted at 380° C in order to stabilized the end group. However, FEP resins become "bread ruck", after roasted , and could not be blended with PTFE powder.

Another important problem is the blend process of preparing a polymer alloy made of PTFE and FEP. In general blending polymers can be carried out by solution blend method, melt blend or dispersion co-precipitate blend method. As there is no any solvent found for PTFE and FEP, they could not be carried out by solution blend. They could not be carried out by melt blend also, because PTFE could not be melt processed. Therefore, the dispersion co-precipitating blent has been the only way used in British patent 935, 706 and Japanese patent kokai 12521/62, although the cost of the polymer alloy should be high, by using expensive fluorine-containing emulsifier in preparing dispersion of PTFE and FEP. Besides, the process of co-precipitating blend is rather complicate.

In accordance with the present invention, fluoropolymer alloys are made available comprising melt fabricatable extra-high-molecular weight fluorinated ethylene-propylene copolymer and one or more other polymers selected from the group consisting of polytetrafluoroethylene, polychlorotrifluoroethylene, polyvinylidene fluoride, tetrafluoroethylene-ethylene copolymer, polysulfone, polyethylene, polypropylene, polyimide, polycarbonate, polyphenylene oxide and polyphenylene sulfide, wherein the molding powder is extra-high-molecular weight fluorinated ethylene-propylene copolymer which can be melt fabricated, with 12-30 % by weight of hexafluoropropylene, weight-average molecular weight of over 2 x 10$^5$ , melt viscosity of 1 x 10$^6$ P or more, and melt flow index less than 0.8 gram/10 minutes.

As a preferred embodiment the fluoropolymer alloys comprise extra-high-molecular weight fluorinated ethylene-propylene copolymer and polytetrafluoroethylene.

As a further preferred embodiment the fluoropolymer alloys have 0.1-60 % by weight extra-high-molecular weight fluorinated ethylene-propylene copolymer and 99.9-40 % by weight poly-

2

EP 0 199 991 B1

tetrafluoroethylene.

As a further embodiment the fluoropolymer alloys contain glass fiber, graphite, molybdenum disulfide, carbon and/or metal powder.

Furthermore, according to the present invention, extra-high-molecular weight fluorinated ethylene-propylene copolymer which can be melt fabricated is prepared by solution precipitation polymerization using liquid hexafluoropropylene as a solvent by charging 0.2-0.5 g of tetrafluoroethylene and hexafluoropropylene per 1 ml autoclave capacity into an autoclave, the monomer mixture of tetrafluoroethylene and hexafluoropropylene containing 11-50 % by weight of tetrafluoroethylene, the weight ratio between water and monomers being 3:1 to 1:1, equivalents of initiator diisopropyl peroxydicarbonate based on monomers being 0.001 to 0.05 % by weight, at a polymerization pressure of 20-30 bar (20-30 kg/cm 2 ), a polymerization temperature of 40 to 80° C and a polymerization time of 1-5 hours per batch.

In accordance with the present invention, the polytetrafluoroethylene (PTFE) used is a commercial resin, including resins prepared by suspension or dispersion polymerization, and has a tensile strength of more than 270 bar (270 kg/cm$^2$) under room temperature.

In accordance with the present invention, the other commercial polymers, such as polychlorotrifluoroethylene, polyvinylidene fluoride, tetrafluoroethylene-ethylene copolymer, polyethylene, polypropylene, polysulfone, polyimide, polycarbonate, polyphenylene oxide, polyphenylene sulfide, can be used to prepare fluoropolymer alloy together with extra-high-molecular weight fluorinated ethylene-propylene copolymer ( EHMW-FEP ).

A given weight ratio of EHMW-FEP and one or more other polymers as described above, have been ground by mill separately, and then mixed and ground again until the two or more phases were homogeneously mixed. The mixture is screened by a 0,42-0,84 mm (40-80 mesh) and ready for processing.

The mixing and grinding process of two or more polymers, may be mixed and ground either in dried powder form or wet powder form. During wet powder mixing and grinding, the polymers are moistened by water, ethyl alcohol, ethyl acetate or a mixture of these solvents. When the mixing is finished, the mixture of polymers must be dried, and then screened.

In the fluoropolymer alloy made of EHMW-FEP and PTFE, the weight of EHMW-FEP is 0.1-99.9% and the weight of PTFE is 99.9-0.1%. In a preferred embodiment the weight ratios have 0.1-60% of EHMW-FEP and 40-99.9% of PTFE.

The fluoropolymer alloys made of EHMW-FEP and PTFE can be melt pressed into articles under temperature of 300-350° C and pressure of 50-200 bar (50-200Kg/cm$^2$) like FEP. They can also be cold compressed under pressure of 50-200 bar (50-200 Kg/cm$^2$) and then sintered under temperature of 300-390° C like PTFE.

The temperatures of melt pressing or sintering fluoropolymer alloys described above depend on the amount of PTFE in them. The higher the amount of PTFE, the higher the temperature.

The fluoropolymer alloys made of EHMW-FEP and PTFE of present invention have not only creep-resistance like FEP, but also high tensile strength under high temperature like PTFE. It exhibits a tensile strength of 200-400 bar (200-400 Kg/cm$^2$) and an elongation of 300-700% under room temperature, and correspondingly 50-200 bar (50-200 Kg/cm$^2$) and 300-700% under 200° C.

Extra-high-molecular weight fluorinated ethylene-propylene copolymers have a good compatibility with polytetrafluoroethlene in the fluoropolymer alloys described above. Fluoropolymer alloy, e.g. , made of 10% of EHMW-FEF and 90% of PTFE, has nearly only one peak of melting and one peak of crystallizing in its DSC spectrum.

All kinds of the fluoropolymer alloys described above can be reinforced and improved by adding glass fiber, graphite, molybdenum disulfide, carbon and various metal powders.

The fluoropolymer alloys made of EHMW-FEP and PTFE of the present invention are a kind of materials having excellent thermal stability, chemical inertness and outstanding electrical insulating properties. Taking this kind of fluoropolymer alloys as material, various diaphragm, seals, linings for valves, pipes, pumps , various components of pumps , such as shells, wheels, wind wrap wires, can be fabricated. The articles made of fluoropolymer alloys have better creep-resistance than that of PTFE and consequently have a rather long operating life.

The fluoropolymer alloys described above can be used in powder coating by either static electricity method or flow-bed method, and can also be fabricated into complex articles using ram-extruding a paste consisting of fluoropolymer alloy and petroleum ether or kerosene.

The invention is more specifically described and explained by means of the following examples . In the examples all parts and percentages are by weight except as otherwise noted.

Example 1

3

20 grams of EHMW-FEP with an melt flow index of 0 gram/10min., and 180 grams PTFE were successively moistened by a mixture of ethyl alcohol and ethyl acetate, milled, filtered, dried and passed through a 40 mesh screen. The resulting powder was cold compressed into a 2 mm thick sheet under pressure of 80 bar (80 Kg/cm$^2$), and sintered in a over for 1 hour at 350° C. After cooling, its tensile strength is 277 bar (277 Kg/cm$^2$) under room temperature.

Example 2

EHMW-FEP and PTFE were mixed in weight ratios of 1/9 ,1/3, 1/1, 3/1 and 9/1 respectively, the resulting mixture milled to pass through a 0,42 mm (40 mesh) screen, cold compressed under 80 bar (80 Kg/cm$^2$) and sintered separately. The properties of the resulting fluoropolymer alloys are shown in Table 1.

Table 1

| Physical properties of alloys made of EHMW-FEP/PTFE | | | | | | | |
|---|---|---|---|---|---|---|---|
| Composition (EHMW-FEP/PTFE) | 1/0 | 9/1 | 3/1 | 1/1 | 1/3 | 1/9 | 0/1 |
| sintering temp. (°C) | 300 | 300 | 300 | 320 | 340-365 | 340-365 | 365 |
| room tensile strength temp. (Kg/cm$^2$) bar | 265 | 210 | 250 | 290 | 260 | 280 | 320 |
| elongation (%) | 330 | 310 | 370 | 500 | 520 | 520 | 650 |
| 200°C tensile strength (Kg/cm$^2$) bar | 46 | 87 | 84 | 82 | 89 | 104 | 89 |
| elongation (%) | 340 | 340 | 500 | 450 | 500 | 680 | 480 |

Example 3

EHMW-FEP was mixed with tetrafluoroethylene-ethylene copolymer (F40) in weight ratio showed in Table 2 by blending dried powder or wetted powder, the resulting fluoropolymer alloys were fabricated by cold compression under pressure of 70-150 bar (Kg/cm$^2$) and then sintered, or by melt pressing.

Table 2

| Physical properties of alloys made of EHMW-FEP and F40 | | | | | | | | |
|---|---|---|---|---|---|---|---|---|
| Composition (EHMW-FEP/F40) | 1/0 | 99/1 | 9/13/1 | | 1/1 | 1/3 | 1/9 | 1/99 | 0/1 |
| fabrication temp. (°C) | 310-380 | 300-350 | 300-340 | 300-330 | 300-320 | 300-320 | 300-320 | 280-330 | 280-340 |
| tensile strength (Kg/cm$^2$) bar | 300 | 310 | 315 | 320 | 325 | 330 | 340 | 350 | 400 |
| elongation (%) | 300 | 300 | 280 | 260 | 200 | 150 | 100 | 100 | 100 |

Example 4

A mixture of 40 grams of EHMW-FEP, 40 grams of PTFE and 10 grams of polysulfone, was moistened with acetone, mixed homogeneously by high speed stirring, milled, dried, 40 mesh screened, cold compressed under 80 bar (Kg/cm$^2$) and then sintered for one hour at 320° C. The hardness (Rockwell) of the fluoropolymer alloy obtained is D50.

Example 5

EHMW-FEP was mixed with polychlorotrifluoroethylene (CTFE) in weight ratio showed in Table 3 by blending dried powder or wetted powder, the resulting fluoropolymer alloys were fabricated by cold compression under pressure of 70-150 bar (Kg/cm$^2$) and then sintered, or by melt pressing.

Table 3

| Physical properties of alloys made of EHMW-FEP and CTFE | | | | | | | | | |
|---|---|---|---|---|---|---|---|---|---|
| Composition (EHMW-FEP/CTFE) | 1/0 | 99/1 | 9/1 | 3/1 | 1/1 | 1/3 | 1/9 | 1/99 | 0/1 |
| fabrication temp. (°C) | 310-380 | 310-330 | 300-330 | 270-300 | 250-300 | 250-300 | 250-300 | 250-300 | 250-320 |
| tensile strength (Kg/cm$^2$) bar | 300 | 280 | 200 | 220 | 300 | 305 | 320 | 300 | 350 |
| elongation (%) | 350 | 300 | 40 | 100 | 250 | 180 | 200 | 150 | 150 |

Example 6

EHMW-FEP was mixed with polyvinylidene fluoride (PVDF) in weight ratio showed in Table 4 by blending dried powder or wetted powder (including using diisobutyl acetone as a moistener), the resulting fluoropolymer alloys were fabricated by cold compression under pressure of 70-150 bar (Kg/cm$^2$) and then sintered, or by melt pressing.

Table 4

| Physical porperties of alloys made of EHMW-FEP and PVDF | | | | | | | | | |
|---|---|---|---|---|---|---|---|---|---|
| Composition (EHMW-FEP/PVDF) | 1/0 | 99/1 | 9/1 | 3/1 | 1/1 | 1/3 | 1/9 | 1/99 | 0/1 |
| fabrication temp. (°C) | 310-380 | 280-320 | 280-330 | 280-330 | 250-330 | 240-300 | 220-250 | 200-250 | 200-250 |
| tensile strength (Kg/cm$^2$) bar | 310 | 330 | 350 | 300 | 300 | 350 | 400 | 450 | 500 |
| elongation (%) | 320 | 250 | 200 | 150 | 150 | 100 | 60 | 60 | 50 |

Example 7

EHMW-FEP was mixed with polysulfone (PS) in weight ratio showed in Table 5 by blending dried powder or wetted powder (including using chloroform as a solvent), the resulting flyoropolymer alloys were fabricated by melt compression under pressure of 70-150 bar (Kg/cm$^2$.).

Table 5

| Physical properties of alloys made of EHMW-FEP and PS | | | | | | | | | |
|---|---|---|---|---|---|---|---|---|---|
| Composition (EHMW-FEP/PS) | 1/0 | 99/1 | 9/1 | 3/1 | 1/1 | 1/3 | 1/9 | 1/99 | 0/1 |
| fabrication temp. (°C) | 310-380 | 280-320 | 250-310 | 220-300 | 250-290 | 250-290 | 270-280 | 200-270 | 200-280 |
| tensile strength (Kg/cm$^2$) bar | 300 | 270 | 250 | 220 | 200 | 250 | 360 | 700 | 800 |
| elongation (%) | 320 | 250 | 200 | 100 | 4 | 5 | 5 | 40 | 50 |

Example 8

EHMW-FEP was mixed with polyethylene (PE) in weight ratio showed in Table 6 by blending dried powder or wetted powder (including using xylene as a solvent), the resulting fluoropolymer alloys were fabricated by melt compression under pressure of 70-150 bar (Kg/cm$^2$).

Table 6

| Physical propreties of alloys made of EHMW-FEP and PE | | | | | | | | | |
|---|---|---|---|---|---|---|---|---|---|
| Composition (EHMW-FEP/PE) | 1/0 | 99/1 | 9/1 | 3/1 | 1/1 | 1/3 | 1/9 | 1/99 | 0/1 |
| fabrication temp. (°C) | 310-380 | 280-350 | 250-300 | 200-300 | 170-250 | 150-200 | 160-170 | 150-170 | 150-200 |
| tensile strength (Kg/cm$^2$) bar | 300 | 280 | 250 | 180 | 100 | 150 | 190 | 200 | 200 |
| elongation 1% | 350 | 300 | 200 | 100 | 50 | 400 | 600 | 210 | 250 |

Example 9

EHMW-FEP was mixed with polypropylene (PP) in weight ratio showed in Table 7 by blending dried powder or wetted powder (including using decalin as a solvent), the resulting fluoropolymer alloys were fabricated by melt compression under pressure of 70-150 bar (Kg/cm$^2$).

Table 7

| Physical properties of alloys made of EHMW-FEP and PP | | | | | | | | | |
|---|---|---|---|---|---|---|---|---|---|
| Composition (EHMW-FEP/PP) | 1/0 | 99/1 | 9/1 | 3/1 | 1/1 | 1/3 | 1/9 | 1/99 | 0/1 |
| fabrication temp. (°C) | 310-380 | 300-330 | 280-320 | 250-300 | 230-300 | 220-280 | 220-250 | 220-260 | 230-300 |
| tensile strength (Kg/cm$^2$) bar | 310 | 300 | 280 | 200 | 180 | 200 | 240 | 310 | 350 |
| elongation (%) | 340 | 300 | 350 | 200 | 300 | 350 | 500 | 250 | 200 |

Example 10

EHMW-FEP was mixed with polycarbonate (PC) in weight ratio showed in Table 8 by blending dried powder or wetted powder (including using chloroform as a solvent), the resulting fluoropolymer alloys were fabricated by melt compression under pressure of 70-150 bar (Kg/cm$^2$).

Table 8

| Physical properties of alloys made of EHMW-FEP and PC | | | | | | | | | |
|---|---|---|---|---|---|---|---|---|---|
| Composition (EHMW-FEP/PC) | 1/0 | 99/1 | 9/1 | 3/1 | 1/1 | 1/3 | 1/9 | 1/99 | 0/1 |
| fabrication temp. (°C) | 310-380 | 300-350 | 290-340 | 290-330 | 280-320 | 280-310 | 280-310 | 250-320 | 220-350 |
| tensile strength (Kg/cm$^2$) bar | 310 | 300 | 280 | 260 | 200 | 300 | 360 | 550 | 700 |
| elongation (%) | 350 | 300 | 200 | 100 | 50 | 10 | 5 | 80 | 100 |

Example 11

EHMW-FEP was mixed with polyphenylene oxide (PPO) in weight ratio showed in Table 9 by blending dried powder or wetted powder (including using chloroform as a solvent), the resulting fluoropolymer alloys were fabricated by melt compression under pressure of 70-150 bar (Kg/cm$^2$).

Table 9

| Physical properties of alloys made of EHMW-FEP and PPO | | | | | | | | | |
|---|---|---|---|---|---|---|---|---|---|
| Composition (EHMW-FEP/PPO) | 1/0 | 99/1 | 9/1 | 3/1 | 1/1 | 1/3 | 1/9 | 1/99 | 0/1 |
| fabrication temp. (°C) | 310-380 | 300-320 | 300-320 | 300-320 | 300-320 | 300-320 | 305-310 | 300-320 | 300-350 |
| tensile strength (Kg/cm$^2$) bar | 305 | 280 | 250 | 200 | 150 | 50 | 110 | 250 | 650 |
| elongation (%) | 330 | 250 | 200 | 100 | 10 | 4 | 5 | 40 | 50 |

Example 12

EHMW-FEP was mixed with polyphenylene sulfide (PPS) in weight ratio showed in Table 10 by blending dried or wetted powder, the resulting fluoropolymer alloys were fabricated by melt compression under pressure of 70-150 bar (Kg/cm$^2$).

EP 0 199 991 B1

Table 10

| Physical properties of alloys made of EHMW-FEP and PPS | | | | | | | | | |
|---|---|---|---|---|---|---|---|---|---|
| Composition (EHMW-FEP/PPS) | 1/0 | 99/1 | 9/1 | 3/1 | 1/1 | 1/3 | 1/9 | 1/99 | 0/1 |
| fabrication temp. (°C) | 310-380 | 300-350 | 300-350 | 300-350 | 300-350 | 300-350 | 300-350 | 300-350 | 290-360 |
| tensile strength (Kg/cm²) bar | 300 | 290 | 280 | 250 | 200 | 300 | 400 | 850 | 900 |
| elongation (%) | 320 | 300 | 250 | 200 | 100 | 50 | 5 | 15 | 10 |

Example 13

EHMW-FEP was mixed with polyimide (PI) in weight ratio showed in Table 11 by blending dried powder or wetted powder, the resulting fluoropolymer alloys were fabricated by melt compression under pressure of 70-150 bar (Kg/cm²) or cold compaction under pressure of 70-150 bar (Kg/cm²) and sintered.

Table 11

| Physical properties of alloys made of EHMW-FEP and PI | | | | | | | | | |
|---|---|---|---|---|---|---|---|---|---|
| Composition (EHMW-FEP-PI) | 1/0 | 99/1 | 9/1 | 3/1 | 1/1 | 1/3 | 1/9 | 1/99 | 0/1 |
| fabrication temp. (°C) | 310-380 | 300-320 | 300-320 | 300-320 | 300-320 | 300-320 | 310-320 | 250-300 | 150-300 |
| tensile strength (Kg/cm²) bar | 320 | 310 | 300 | 250 | 200 | 300 | 400 | 800 | 900 |
| elongation (%) | 330 | 300 | 280 | 250 | 100 | 80 | 50 | 10 | 5 |

Example 14

10 grams of EHMW-FEP were mixed with 90 grams molding powder or dispersion powder of PTFE, and then the resulting mixture was milled, 0,42 mm (40 mesh) screened. The resulting dried powder of fluoropolymer alloy were moistened by 200E gasoline, cold compressed and sintered. This fluoropolymer alloy product can be used for linings for valves and pipes.

Example 15

40 grams of fluoropolymer alloy made of EHMW-FEP and PTFE were mixed with glass fiber in its weight ratio of 10%, 20% and 30% respectively. The resulting mixture was cold compressed under pressure of 80 bar (Kg/cm²) and sintered for 2 hours at 320° C separately. The date of tensile strength of these reinforced fluoropolymer alloy are 250, 220 and 150 bar (Kg/cm²), respectively, under room temperature.

Example 16

Fluoropolymer alloy made of 50 grams of EHMW-FEP and 50 grams of PTFE was mixed with glass fiber in its weight ratio of 20% and graphite in its weight ratio of 3%, the resulting mixture was milled to pass through 0,42 mm (40 mesh) screen, cold compressed under pressure of 80 bar (Kg/cm²) and then sintered for 2 hours at 320° C. The tensile strength, elongation and hardness (Rockwell) of the reinforced fluoropolymers alloys are 150 bar (Kg/cm²,), 220% and 58, respectively.

8

Example 17

Process for preparing extra-high-molecular weight fluorinated ethylene-propylene copolymer, e.g. in a stainless-steel autoclave having a capacity of 130 liters are charged 60 liters of deionised water, 45 Kg of initial monomers containing hexafluoropropylene weight ratio of 86.6%. The contents were heated to 55-57° C with a pressure of 22.0 bar (Kg/cm$^2$), then 25 ml of diisopropyl peroxydicarbonate were added. The copolymerization was carried on for three hours. 7.5 Kg of dried copolymer powder having a hexafluropropylene weight ratio of 14.5%, a melt viscosity of $1.8 \times 10^6$ P (poises) and a melt flow index of 0.3 g/10 min could been obtained. A sample of the copolymer powder was molded into sheet with a thickness of 2 mm at 310° C, which showed the tensil strength 290 bar (Kg/cm$^2$) elongation 320%; and flex fatigue life more than $2 \times 10^5$ cycle under room temperature.

## Claims

1. Fluoropolymer alloys comprising melt fabricatable extra-high-molecular weight fluorinated ethylene-propylene copolymer and one or more other polymers selected from the group consisting of polytetrafluoroethylene, polychlorotrifluoroethylene, polyvinylidene fluoride, tetrafluoroethylene-ethylene copolymer, polysulfone, polyethylene, polypropylene, polyimide, polycarbonate, polyphenylene oxide and polyphenylene sulfide, wherein the molding powder is extra-high-molecular weight fluorinated ethylene-propylene copolymer which can be melt fabricated, with 12-30 % by weight of hexafluoropropylene, weight-average molecular weight of over $2 \times 10^5$ , melt viscosity of $1 \times 10^6$ P or more, and melt flow index less than 0.8 gram/10 minutes.

2. Fluoropolymer alloys as claimed in claim 1, which comprises extra-high-molecular weight fluorinated ethylene-propylene copolymer and polytetrafluoroethylene.

3. Fluoropolymer alloys as claimed in claim 2 characterized by having 0.1-60 % by weight extra-high-molecular weight fluorinated ethylene-propylene copolymer and 99.9-40% by weight polytetrafluoroethylene.

4. Fluoropolymer alloys as claimed in any of the preceding claims containing glass fiber, graphite, molybdenum disulfide, carbon and/or metal powder.

5. Process for preparing the fluoropolymer alloys as claimed in any of the preceding claims, using either dried powder co-mill or wetted powder co-mill.

6. Process of dried powder co-mill for preparing fluoropolymer alloys as claimed in claim 5, characterized by milling extra-high-molecular weight fluorinated ethylene-propylene copolymer and one or more the other polymers, separately, and then mixing the polymers in a given weight ratio and milling the mixture again until it is homogeneous and passing through a 0.42 to 0.84 mm (40 to 80 mesh) screen.

7. Process of wetted powder co-mill for preparing fluoropolymer alloys as claimed in claim 5, characterized by moistening a given amount of extra-high-molecular weight fluorinated ethylene-propylene copolymer and at least one or more other of the polymers, with water, ethyl alcohol, ethyl acetate or mixed solvent of them and then milling and blending until it is homogeneous, filtering, drying and finally passing it through a 0.42 to 0.84 mm (40 to 80 mesh) screen.

8. Process by preparing extra-high-molecular weight fluorinated ethylene-propylene copolymer suitable for melt fabrication as claimed in any of the claims 1 to 4, which comprises a solution precipitation polymerization using liquid hexafluoropropylene as a solvent by charging 0.2-0.5 g of tetrafluoroethylene and hexafluoropropylene per 1 ml autoclave capacity into an autoclave, the monomer mixture of tetrafluoroethylene and hexafluoropropylene containing 11-50 % by weight of tetrafluoroethylene, the weight ratio between water and monomers being 3:1 to 1:1, equivalents of initiator diisopropyl peroxydicarbonate based on monomers being 0.001 to 0.05 % by weight, at a polymerization pressure of 20-30 bar (20-30 kg/cm $^2$ ), a polymerization temperature of 40 to 80° C and a polymerization time of 1-5 hours per batch.

## Patentansprüche

1. Fluorpolymer-Legierungen, die aufweisen: schmelzverarbeitbares extrahochmolekulares fluoriertes Ethylen-Propylen-Copolymer und ein oder mehr weitere Polymere, die ausgewählt sind aus der Gruppe, die umfaßt: Polytetrafluorethylen, Polychlortrifluorethylen, Polyvinylidenfluorid, Tetrafluorethylen-Ethylen-Copolymer, Polysulfon, Polyethylen, Polypropylen, Polyimid, Polycarbonat, Polyphenylenoxid und Polyphenylensulfid, wobei das Preßpulver extrahochmolekulares fluoriertes Ethylen-Propylen-Copolymer ist, das schmelzverarbeitbar ist, mit 12-30 Gew.-% Hexafluorpropylen, einem Gewichtsmittel des Molekulargewichts von mehr als $2 \times 10^5$, einer Schmelzviskosität von $1 \times 10^6$ P oder mehr und einem Schmelzindex von weniger als 0,8 g/10 min.

2. Fluorpolymer-Legierungen nach Anspruch 1, die extrahochmolekulares fluoriertes Ethylen-Propylen-Copolymer und Polytetrafluorethylen aufweisen.

3. Fluorpolymer-Legierungen nach Anspruch 2, gekennzeichnet durch 0,1-60 Gew.-% extrahochmolekulares fluoriertes Ethylen-Propylen-Copolymer und 99,9-40 Gew.-% Polytetrafluorethylen.

4. Fluorpolymer-Legierungen nach einem der vorhergehenden Ansprüche, die Glasfasern, Graphit, Molybdendisulfid, Kohlenstoff und/oder Metallpulver enthalten.

5. Verfahren zum Herstellen der Fluorpolymer-Legierungen nach einem der vorhergehenden Ansprüche unter Verwendung von entweder gemeinsam vermahlenem Trockenpulver oder gemeinsm vermahlenem Feuchtpulver.

6. Verfahren zum gemeinsamen Vermahlen von Trockenpulver zur Herstellung von Fluorpolymer-Legierungen nach Anspruch 5, gekennzeichnet durch separates Vermahlen von extrahochmolekularem fluoriertem Ethylen-Propylen-Copolymer und ein oder mehr der weiteren Polymere und anschließendes Vermischen der Polymere in einem gegebenen Gewichtsverhältnis und erneutes Vermahlen des Gemischs, bis es homogen ist und ein Sieb von 0,42--0,84 mm (40-80 mesh) passiert.

7. Verfahren zum gemeinsamen Vermahlen von Feuchtpulver zur Herstellung von Fluorpolymer-Legierungen nach Anspruch 5, gekennzeichnet durch Anfeuchten einer gegebenen Menge von extrahochmolekularem fluoriertem Ethylen-Propylen-Copolymer und wenigstens ein oder mehr der weiteren Polymere mit Wasser, Ethylalkohol, Ethylacetat oder einem Lösungsmittelgemisch daraus und anschließendes Vermahlen und Vermischen bis zur Homogenität, Filtern, Trocknen und schließlich Passieren durch ein Sieb von 0,42-0,84 mm (40-80 mesh).

8. Verfahren zum Herstellen von extrahochmolekularem fluoriertem Ethylen-Propylen-Copolymer, das zur Schmelzverarbeitung geeignet ist, nach einem der Ansprüche 1-4, wobei das Verfahren aufweist: eine Lösungs-Fällungspolymerisation unter Einsatz von flüssigem Hexafluorpropylen als ein Lösungsmittel durch Aufgeben von 0,2-0,5 g Tetrafluorethylen und Hexafluorpropylen pro 1 ml Autoklaveninhalt in einen Autoklaven, wobei das Monomeren-Gemisch von Tetrafluorethylen und Hexafluorpropylen 11-50 Gew.-% Tetrafluorethylen enthält, das Gewichtsverhältnis zwischen Wasser und Monomeren 3:1 bis 1:1 ist und die Äquivalente des Starters Diisopropylperoxydicarbonat bezogen auf die Monomeren 0,001-0,05 Gew.-% betragen, bei einem Polymerisationsdruck von 20-30 bar (20-30 kg/cm$^2$), einer Polymerisationstemperatur von 40-80 °C und einer Polymerisationsdauer von 1-5 h pro Ansatz.

**Revendications**

1. Alliages de polymère fluoré qui comprennent un copolymère éthylène-propylène fluoré de très haut poids moléculaire et un ou plusieurs autres polymères choisis dans le groupe formé par le polytétrafluoréthylène, le polychlorotrifluoréthylène, le fluorure de polyvinylidène, un copolymère tétrafluoréthylène-éthylène, une polysulfone, le polyéthylène, le polypropylène, un polyimide, un polycarbonate, le poly(oxyde de phénylène) et le poly(sulfure de phénylène), dans lesquels la poudre à mouler est un copolymère éthylène-propylène fluoré de très haut poids moléculaire qui peut être mis en oeuvre à l'état fondu contenant 12 à 30 % en poids d'hexafluoropropylène, dont le poids moléculaire moyen en poids est supérieur à $2 \times 10^5$, la viscosité à l'état fondu est de $1 \times 10^6$ poises ou plus et l'indice de fluidité à l'état fondu est inférieur à 0,8 gramme/10 minutes.

2. Alliages de polymère fluoré selon la revendication 1, qui comprennent un copolymère éthylène-propylène fluoré de très haut poids moléculaire et du polytétrafluoréthylène.

3. Alliages de polymère fluoré selon la revendication 2, caractérisés en ce qu'ils contiennent 0,1 à 60 % en poids de copolymère éthylène-propylène fluoré de très haut poids moléculaire et 99,9 à 40 % en poids de polytétrafluoréthylène.

4. Alliages de polymère fluoré selon l'une quelconque des revendications précédentes, contenant de la fibre de verre, du graphite, du bisulfure de molybdène, du carbone et/ou une poudre de métal.

5. Procédé de production des alliages de polymère fluoré tels que revendiqués dans l'une quelconque des revendications précédentes, par co-broyage de poudres séchées ou par co-broyage de poudres mouillées.

6. Procédé de co-broyage de poudres séchées pour la production d'alliages de polymère fluoré selon la revendication 5, caractérisé en ce qu'un copolymère éthylène-propylène fluoré de très haut poids moléculaire et un ou plusieurs des autres polymères sont broyés séparément, puis les polymères sont mélangés en un rapport en poids donné et le mélange est broyé de nouveau jusqu'à homogénéité et passé à travers un tamis de 0,42 à 0,84 mm (40 à 80 mesh).

7. Procédé de co-broyage de poudres mouillées pour la production d'alliages de polymère fluoré selon la revendication 5, caractérisé en ce qu une quantité donnée de copolymère éthylène-propylène fluoré de très haut poids moléculaire et d'au moins un ou plusieurs des autres polymères est humidifiée avec de l'eau, de l'alcool éthylique, de l'acétate d'éthyle ou un solvant mixte d'entre eux, puis broyée et mélangée jusqu'à homogénéité, filtrée, séchée et enfin passée à travers un tamis de 0,42 à 0,84 mm (40 à 80 mesh).

8. Procédé de préparation d'un copolymère éthylène-propylène fluoré de très haut poids moléculaire convenant pour la mise en oeuvre à l'état fondu selon l'une quelconque des revendications 1 à 4, qui comprend une polymérisation par précipitation en solution en utilisant de l'hexafluoropropylène liquide comme solvant, en chargeant un autoclave avec 0,2 à 0,5 g de tétrafluoréthylène et d'hexafluoropropylène par millilitre de capacité d'autoclave, le mélange de tétrafluoréthylène et d'hexafluoropropylène monomères contenant 11 à 50 % en poids de tétrafluoréthylène, le rapport en poids entre l'eau et les monomères étant de 3:1 à 1:1, la proportion équivalente de peroxydicarbonate de diisopropyle utilisé comme initiateur étant de 0,001 à 0,05 % en poids par rapport aux monomères, la pression de polymérisation étant de 20 à 30 bars (20 à 30 kg/cm$^2$), la température de polymérisation de 40 à 80°C et la durée de polymérisation de 1 à 5 heures par charge.